# EUROPEAN PATENT SPECIFICATION

(11) **EP 2 055 537 B1**
(45) Date of publication and mention of the grant of the patent: **27.02.2013**
(21) Application number: 08015610.2
(22) Date of filing: 04.09.2008
(51) Int. Cl.: B60R 21/2165, B32B 27/00

(54) **Interior component and airbag apparatus for vehicle**
Innenbauteil und Airbagvorrichtung für ein Fahrzeug
Garniture intérieure et dispositif de coussin gonflable pour véhicule automobile

(30) Priority: 31.10.2007 JP 2007284602
(43) Date of publication of application: 06.05.2009
(73) Proprietor: Takata Corporation, Tokyo 106-8510 (JP)
(72) Inventor: Hayashi, Shinji, Tokyo 106-8510 (JP)
(74) Representative: Banzer, Hans-Jörg

(56) References cited:
- EP-A1- 1 520 754
- DE-U1- 29 805 295
- FR-A1- 2 721 877
- JP-A- 2000 006 742

## Description

### Technical Field

The present invention relates to an interior component and an airbag apparatus used for vehicles such as motor vehicles and, more specifically, to an interior component having a covering member bonded on the front surface thereof and an airbag apparatus having such interior component.

### Background Art

Generally, vehicles such as motor vehicles have an airbag apparatus mounted thereon for constraining an occupant by inflating and deploying an airbag in a cabin at the time of collision or when the collision is expected. As the airbag apparatus described above, various types including as an airbag apparatus for a drivers seat mounted in a steering, an airbag apparatus for a passenger seat mounted in an instrument panel, a side airbag apparatus mounted in a side surface of the vehicle or in a seat, or a knee airbag apparatus mounted to a portion below a dashboard are developed and employed. The airbag apparatuses of these types are normally stored in a structure of the vehicle in such a manner that the presence thereof cannot be recognized in a normal state, and are adapted to break the structure of the vehicle to inflate and deploy the airbag in case of emergency such as the collision. Therefore, a portion for deploying the airbag of the airbag apparatus requires to be covered so as to be assimilated with the interior component in the cabin in the normal state and, in contrast, requires to be ready for smooth and quick deployment of the airbag in case of emergency.

The airbag apparatuses described above each generally include an airbag which is folded in the normal state and is inflated and deployed in case of emergency, an inflator for supplying gas to the airbag, a retainer for storing the airbag, and an interior component which defines the portion for deploying the airbag and is exposed to the cabin. The interior component is a thin panel member molded with resin, and is formed with a groove which is referred to as a tear line on the back surface (the surface facing the airbag). The tear line is a thinned portion formed for allowing the airbag to tear the interior component easily. Since the interior component constitutes part of decorations of the cabin, the front surface exposed to the cabin is sometimes covered with a decorative member such as leather, simulated synthetic leather, or woven fabric bonded thereto as a covering member. The covering member is preferably torn along the tear line when the airbag is deployed. Therefore, a recess as the tear line is formed on the leather as well and is aligned with the tear line on a body of an airbag cover when bonding as described in Japanese Unexamined Patent Application Publication No. 9-183372 or Japanese Unexamined Patent Application Publication No. 9-183373, or a precut covering member is press-fitted into a groove-like depression formed on the front surface of the cover as in Japanese Unexamined Patent Application Publication No. 10-194069. EP 1 520 754 A1 provides an interior panel for covering an air bag module of a vehicle comprising an interior component according to the preamble of claim 1.

### Disclosure of the Invention

### Problems to be Solved by the Invention

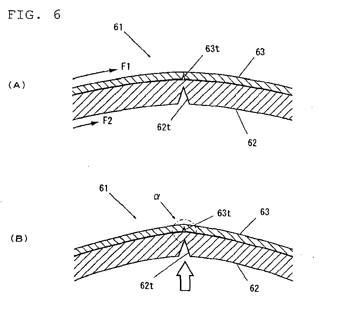

However, since the interior component is mounted on the vehicle and forms the part of the airbag apparatus, it is necessary to prevent deterioration of its function or appearance due to deterioration with time under a severe environment of usage and hence to conduct a predetermined environmental deterioration test. The environmental deterioration test here is a test to be conducted by repeating a temperature cycle of, for example, taking 24 hours to increase the temperature from a room temperature to 105°C, then decrease the same to -40°C, and increase the same again to the room temperature continuously for about five days, and is a test to confirm the heat resistance or the resistance for temperature cycle of the interior component. Fig. 6 is a cross-sectional view showing a panel portion of the interior component in the related art corresponding to Japanese Unexamined Patent Application Publication No. 9-183373, in which (A) is a drawing illustrating a state before the environmental deterioration test, and (B) shows the same after the environmental deterioration test. As shown in Fig. 6(A), a panel portion 61 of the interior component includes a body portion 62 and a covering member 63 bonded to the front surface of the body portion 62. The body portion 62 and the covering member 63 are formed with tear lines 62t, 63t on the back surface thereof, respectively. When the environmental deterioration test is conducted on the interior component having the panel portion 61 configured as described above, a contractive force F1 generated in the covering member 63 is larger than a contractive force F2 generated in the body portion 62 because of the difference of coefficient of heat absorption between the body portion 62 and the covering member 63 as shown in Fig. 6(A) and, finally, the panel portion 61 is deformed into a convex shape in the direction indicated by an arrow in Fig. 6(B). At this time, since the tear lines 62t, 63t, which are thinned portions, are formed on the panel portion 61, it is deformed by being bent along the tear lines 62t, 63t. Therefore, in the front surface of a portion α surrounded by a chain line in the drawing, marks of the tear lines 62t, 63t are highly visible, which arises a problem that the appearance of the interior component is impaired. This problem may arise not only by the environmental deterioration test described above, but also by the deterioration with time under the severe environment of usage.

In the interior component disclosed in Japanese Unexamined Patent Application Publication No. 10-194069, since the covering member is press-fitted into the groove-like depression formed on the front surface of the cover, there arises a problem that the press-fitted portion is exposed as a line or a depression by all means on the front surface of the covering member and hence the appearance of the interior component is impaired and the terms of design are limited.

The present invention is invented in view of the problems described above, and has the object to provide an interior component and an airbag apparatus for a vehicle which less limits in terms of the design and is able to restrain the appearance thereof from being deteriorated due to an environmental deterioration test or deterioration with time due to a severe environment of usage.

### Means for Solving the Problems

According to the invention, this object is achieved by an interior component as defined in claim 1 or an airbag apparatus as defined in claim 6. The dependent claims define preferred and advantageous embodiments of the invention.

According to the present invention, there is provided an interior component of a vehicle including a panel portion having an exposed front surface, characterized in that a covering member is bonded to the side of the front surface of a body portion which constitutes the panel portion, and the body portion is partly formed with a thinned portion having a thickness smaller than that of other portions, and the thinned portion includes a recess which defines a void between the thinned portion and the covering member. The thinned portion includes the first recess and a second recess formed in the body portion such that center axes of the first recess and the second recess are shifted with respect to one another.

The first recess may be formed to have a width equal to or larger than the amount of contraction of the panel portion caused by deterioration with time, or may be formed to have a depth equal to or larger than the depth which is aligned to be flush with the front surface of the body portion due to the deformation caused by the deterioration with time, or may be a groove formed linearly or in a dot-line form. The thinned portion may be formed so as to be deformed resiliently substantially in the direction of contraction due to a contractive force of the panel portion caused by the deterioration with time, or may include the recess and a second recess formed on the back surface of the panel portion. Furthermore, when the panel portion corresponds to the portion for deploying an airbag, the thinned portion is preferably formed to have a thickness which is able to torn thereof when the airbag is deployed. The term "deterioration with time" includes not only the deterioration with time in the actual environment of usage, but also the environmental deterioration test for confirming the heat resistance or the resistance for temperature cycle.

According to the present invention, there is provided an airbag apparatus including an airbag being folded in a normal state and being inflated and deployed in case of emergency, an inflator for supplying gas to the airbag; a retainer for storing the airbag, and the interior component having a panel portion which constitutes a portion for deploying the airbag and having an exposed front surface.

### Advantages

According to the interior component and the airbag apparatus for a vehicle in the present invention, when bonding the covering member to the interior component having the thinned portion, the contraction of the panel portion caused by the environmental deterioration test or the deterioration with time in the severe environment in usage is absorbed by the void and the deterioration of the appearance of the interior component is restrained by forming the first recess on the body portion so as to define the void between the body portion and the covering member. The interior component and the airbag apparatus for a vehicle according to the present invention is obtained only by bonding the covering material on the front surface of the body portion, so that the covering material is less limited in terms of design.

By forming first the recess to have the width equal to or larger than the amount of contraction of the panel portion caused by the deterioration with time, the amount of contraction of the panel portion generated by the deterioration with time may be absorbed by the void defined by the recess, so that the convex deformation of the interior component due to the deterioration with time is restrained. Also, by forming the first recess to have the depth equal to or larger than the depth which is aligned to be flush with the front surface of the body portion due to the deformation caused by the deterioration with time, the thinned portion is prevented from being formed into a pointed bent portion even when the panel portion is subjected to the convex deformation caused by the deterioration with time. By forming the first recess into the groove formed linearly or in the dot-line form, the recess may be formed arbitrary like a point which is easily deformed, or a highly visible point in terms of design and, specifically, the recess may be formed along the thinned portion formed linearly as the tear line.

By forming the thinned portion so as to be resiliently deformed substantially in the direction of contraction due to a contractive force of the panel portion caused by the deterioration with time, the amount of contraction of the panel portion caused by the deterioration with time may be absorbed by the void defined by the recess. By forming the thinned portion with the recess and the second recess, the recess may be used as a recess as a countermeasure for the environmental deterioration test, and the second recess may be used as a recess for securing a required thickness of the thinned portion, so that the function as the interior component is maintained and, simultaneously, the deterioration of the appearance due to the environmental deterioration test or the deterioration with time caused by the severe environment of usage may be restrained.

In the case of the interior component of the airbag apparatus, by forming the thinned portion to have the thickness which is able to be torn when the airbag is deployed, the airbag may be deployed smoothly in the cabin.

### Brief Description of the Drawings

Fig. 1 is a cross-sectional view showing a panel portion of an interior component for a vehicle, in which (A) shows a state after the molding, (B) shows a state during an environmental deterioration test, and (C) shows a state after the environmental deterioration test.
Fig. 2 is a cross-sectional view showing a panel portion of the interior component for a vehicle, in which (A) shows a state after molding, (B) shows a state during the environmental deterioration test, and (C) shows a state after the environmental deterioration test.
Fig. 3 is a cross-sectional view showing a further panel portion of the interior component for a vehicle, in which only (C) shows an embodiment of the invention.
Fig. 4 is a drawing showing an airbag apparatus for a drivers seat mounted in a steering, in which (A) is a front view of the steering and (B) is a schematic cross-sectional view taken along the line B-B in Fig. 4(A).
Fig. 5 is a front view showing the body portion in a state in which a covering member of the module cover is removed, in which (A) shows a case in which the recess is formed into a series of linear grooves, (B) shows a case in which the recess is partly formed, and (C) is a case in which the recess is formed into a groove in a dot-line form.
Fig. 6 is a cross-sectional view showing a panel portion of an interior component in the related art, in which (A) shows a state before the environmental deterioration test, and (B) shows the same after the environmental deterioration test.

### Best Mode for Carrying Out the Invention

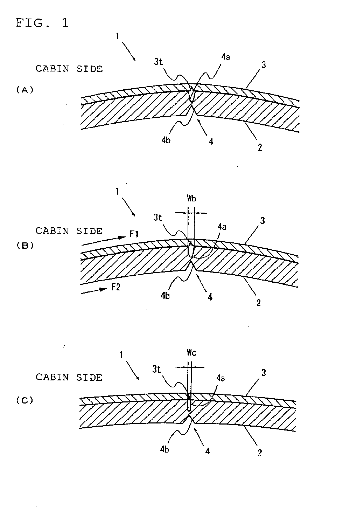

Fig. 1 is a cross-sectional view showing a panel portion of an interior component of a vehicle, in which (A) shows a state after molding, (B) shows a state during an environmental deterioration test, and (C) shows a state after the environmental deterioration test.

The interior component for a vehicle shown in Fig. 1(A) includes a panel portion 1 having an exposed front surface, and a covering member 3 is bonded to the side of the front surface of a body portion 2 which constitutes the panel portion 1 and the body portion 2 is partly formed with a thinned portion 4 having a thickness smaller than that of other portions, and the thinned portion 4 includes a recess 4a which defines a void between the thinned portion 4 and the covering member 3. Although a case in which the panel portion 1 is projected so as to form a convex on the cabin side is shown in the drawing, the panel portion 1 is not limited to such a shape, and may be formed into a flat panel shape or may be formed a concave on the cabin side.

The panel portion 1 shown in Fig. 1(A) is, for example, a portion for deploying an airbag of an airbag apparatus mounted on the vehicle. The body portion 2 is formed by molding resin such as PP (polypropylene), ABS (acrylonitrile-butadiene-styrene), or thermoplastic elastomer. Since the panel portion 1 must allow the airbag to be deployed smoothly in the cabin, it is generally formed with a tear line which tears in association with the inflation and deployment of the airbag, and the thinned portion 4 corresponds to the tear line in this case. The panel portion 1 is not limited to the portion for deploying the airbag described above, and may be applied to all the panel portion of the interior component to which the covering member 3 is bonded to the exposed portion thereof and which has the thinned portion 4, and also of the interior component which is subjected to the deterioration of the appearance because of exposure of the mark of the thinned portion 4 on a design surface (exposed front surface) of the covering member 3 due to deformation of the panel portion 1 in association with an environmental deterioration test. For example, the present invention may be applied to a case in which a glove box or a console box is formed with a thinned portion for the reasons of function or design.

The covering member 3 is formed of a material like, for example, leather, simulated synthetic leather, or woven fabric and has a function to decorate the interior component. In particular, when the high-grade appearance is wanted, the leather or the simulated synthetic leather is used in many cases. As shown in Fig. 1(A), when the thickness of the covering member 3 is rather large, a linear groove (tear line 3t) is formed for allowing easy tearing when the airbag is deployed. The tear line 3t is formed along the thinned portion 4 linearly or in a dot-line form in such a manner that the center axes of the tear line 3t and the recess 4a substantially match. As a matter of course, when the tear line 3t is not necessary as in a case in which the panel portion 1 does not correspond to the portion for deploying the airbag or the covering member 3 is formed of a material which is easily torn, it is not necessary to form the tear line 3t. As shown in Fig. 1(A), the covering member 3 is expanded and bonded to the front surface of the body portion 2, and a void is defined by the recess 4a between the covering member 3 and the thinned portion 4. In this manner, the covering member 3 does not have to be press-fitted into the recess 4a, but only have to be expanded and bonded to the front surface of the body portion 2, so that the recess 4a is not an element to deteriorate the appearance of the panel portion 1, and hence the covering member 3 is less limited in terms of design. The tear line 3t may be formed at a position having a center axis deviated from that of the recess 4a.

As shown in Fig. 1(A), the thinned portion 4 includes the recess 4a formed on the side of the front surface (cabin side) of the body portion 2 and a second recess 4b formed on the side of the back surface of the body portion 2. The thickness of the thinned portion 4 is smaller than that of other portions of the body portion 2 and, more specifically, is a thickness which is able to be torn when the airbag is deployed. The recess 4a is formed with a groove formed linearly or in a dot-line form having a substantially U-shaped cross-section, having a width equal to or larger than the amount of contraction of the panel portion 1 generated at the time of the environmental deterioration test. The second recess 4b is a linear groove which corresponds to the tear line in the related art by the formation of the recess 4a also on the front surface of the body portion 2. In the present invention, the second recess 4b is formed to have a depth smaller than the tear line in the related art. The recess 4a is formed along the second recess 4b in such a manner that the center axes of the recess 4a and the second recess 4b substantially match.

Subsequently, an operation of the interior component shown in Fig. 1(A) will be described. In Fig. 1(B), a width Wb of the recess 4a is formed to be larger than the amount of contraction of the panel portion 1 generated at the time of the environmental deterioration test. When the environmental deterioration test is conducted on the interior component, since a contractive force F1 generated in the covering member 3 is larger than a contractive force F2 generated in the body portion 2 because of the difference of coefficient of heat absorption between the body portion 2 and the covering member 3, a contractive force which causes the panel portion 1 to be contracted toward the center portion thereof is generated in the panel portion 1 as shown in Fig. 1(B). At this time, the thinned portion 4 is able to be deformed resiliently substantially in the direction of contraction since the recess 4a is formed on the thinned portion 4, so that the contraction of the panel portion 1 is absorbed by the resilient deformation of the recess 4a so as to collapse the void defined between the thinned portion 4 and the covering member 3 as shown in Fig. 1(C). In other words, when the width Wb of the recess 4a is reduced as a width Wc shown in Fig. 1(C), the amount of contraction of the panel portion 1 is absorbed. Therefore, according to the present invention, the convex deformation of the interior component due to the environmental deterioration test may be restrained, and the thinned portion 4 may be prevented from being formed with a pointed bent portion, whereby the deterioration of the appearance of the panel portion 1 is restrained. Even when the thinned portion is deformed as shown in Fig. 1(C), since the covering member 3 contracts simultaneously, the covering member 3 is prevented from being formed with wrinkles in the periphery of the thinned portion 4.

Here, the environmental deterioration test is a general nomination of the test for confirming the heat resistance or the resistance for temperature cycle by creating a pseudo-environment of usage of the interior component and a test for causing the deterioration with time intentionally on the interior component. In general, the environmental deterioration test is severer than the actual environment of usage in terms of conditions, and hence it is considered to be sufficient as long as the function or the appearance of the interior component is not impaired in the environmental deterioration test, which is a sort of the deterioration with time. Therefore, in this specification, description is given not relating to a case in which the interior component is designed on the basis of the deterioration with time in the actual environment of usage, but to a case in which the interior component is designed on the basis of the deterioration with time by the environmental deterioration test is described. Although detailed test items in the environmental deterioration test differ from the type, size, material or the like of the interior component, there are a test in which a temperature cycle of taking 24 hours to increase the temperature from a room temperature to 105°C, then decrease the same to -40°C, and increase the same again to the room temperature continuously for about five days, or a test of exposing the interior component under an environment of 110° for 1000 hours. The test items as described above are illustrative only, and the uppermost and lowermost temperatures, the cycles of the temperature cycle, and the period of continuation of the test may be set as desired. Since the width Wb of the recess 4a differs depending on the material or the thickness of the body portion 2 or the items of the environmental deterioration test, they may be set on the basis of the results of a sample test, may be set on the basis of simulation, or may be set in reference to experiences in the past or data of products which are actually used.

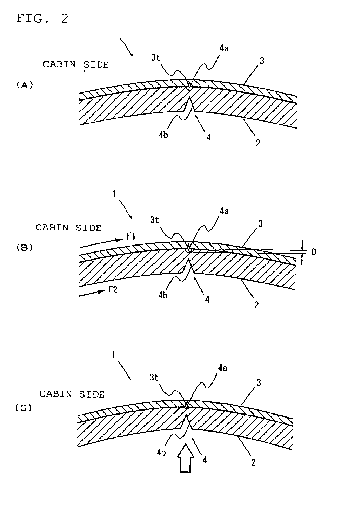

Fig. 2 is a cross-sectional view showing another panel portion of the interior component for a vehicle, in which (A) shows a state after molding, (B) shows a state during the environmental deterioration test, and (C) shows a state after the environmental deterioration test. The same components as those in Fig.1 are designated by the same reference numerals and overlapped descriptions will be omitted.

The interior component shown in Fig. 2(A) is formed to have a depth D of the recess 4a larger than the depth which is aligned to be flush with the front surface of the body portion 2 due to the deformation generated at the time of the environmental deterioration test. It is intended not to restrain the convex deformation of the panel portion 1, but to restrain the thinned portion 4 from being formed with a pointed bent portion even when the panel portion 1 is subjected to the convex deformation. Therefore, the depth D of the recess 4a in Fig.2 is smaller than that of the recess 4a in Fig.1. On the other hand, since the thinned portion 4 is required to be formed to have a thickness which is able to be torn when the airbag is deployed, the depth of the second recess 4b in Fig.2 is larger than that of the second recess 4b in Fig.1

Subsequently, an operation of the interior component shown in Fig. 2 (A) will be described. As shown in Fig. 2(B), the depth D of the recess 4a is set to a depth equal to or larger than the depth which is aligned to be flush with the front surface of the body portion 2 by the deformation generated at the time of the environmental deterioration test. When the environmental deterioration test is conducted on the interior component, since the contractive force F1 generated in the covering member 3 is larger than the contractive force F2 generated in the body portion 2 because of the difference of the coefficient of heat absorption between the body portion 2 and the covering member 3, a contractive force which causes the panel portion 1 to be contracted toward the center portion thereof is generated in the panel portion 1. At this time, since the thinned portion 4 cannot be contracted as in the first embodiment, it is resiliently deformed in the direction indicated by an arrow in Fig. 2(C). In other words, the panel portion 1 is subjected to the convex deformation toward the cabin as in the related art. However, in the present invention, since the recess 4a is formed, the amount of convex deformation of the thinned portion 4 is absorbed by the depth D. In other words, as shown in Fig. 2(C), the recess 4a is deformed so as to be exposed on the front surface of the body portion 2 in association with the convex deformation of the panel portion 1, and is brought into a state in which the depth D is reduced. Therefore, the thinned portion 4 is prevented from being formed with a pointed bent portion, and hence the deterioration of the appearance of the panel portion 1 is restrained. Even when the thinned portion is deformed as shown in Fig. 2(C), since the covering member 3 is also contracted, the covering member 3 is prevented from being formed with wrinkles in the periphery of the thinned portion 4. The depth D of the recess 4a, being different depending on the material, the thickness of the body portion 2, or the items of the environmental deterioration test, may be set on the basis of the results of the sample test, may be set on the basis of the simulation, or may be set in reference to the experiences in the past or the data of the products which are actually used.

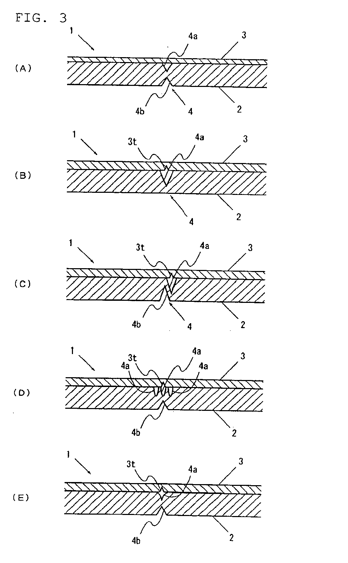

Fig. 3 is a cross-sectional view showing a further panel portion of the interior component for a vehicle, whereby only (C) shows an embodiment of the present invention. Although a case in which the panel portion 1 is formed into a flat panel shape is shown, it may be curved into a convex shape or a concave shape as a matter of course. The same components as in Fig.1 will be designated by the same reference numerals and overlapped descriptions will be omitted.

In Fig. 3(A), the recess 4a shown in Fig. 1(A) is formed substantially into a V-shape in cross-section. Even when the recess 4a of such a shape is employed, the contraction generated at the time of the environmental deterioration test is absorbed by the recess 4a. A case in which the covering member 3 is relatively thin is shown in the drawing here, and the covering member 3 is not formed with the tear line 3t on the back surface thereof. In this manner, when the covering member 3 is relatively thin, or is formed of a material which is able to easily be torn, even when the panel portion 1 corresponds to the portion for deploying the airbag, it is not necessarily required to form the tear line 3t. Although not shown in the drawing, the recess 4a shown in Fig. 3(A) may be formed substantially into a V-shape in cross-section and, when the covering member 3 is relatively thin, but is formed of a material which is hardly torn, the tear line 3t may be formed thereon.

In Fig. 3(B), the depth of the recess 4a in Fig.3(A) is set to a maximum depth. In other words, the portion corresponding to the depth of the second recess 4b which defines the thinned portion 4 is secured by the recess 4a. Even when the recess 4a having such a shape is employed, the contraction generated at the time of environmental deterioration test is absorbed by the recess 4a. Even when the panel portion 1 corresponds to the portion for deploying the airbag, since the thinned portion 4 is formed to have a thickness which is able to be torn, it functions as a tear line. The recess 4a may be formed substantially into a U-shape in cross-section, and the tear line 3t may not be formed when unnecessary.

In the embodiment of the invention shown in Fig. 3(C), the thinned portion 4 is formed in such a manner that the center axes of the recess 4a and the second recess 4b are shifted. Even when the thinned portion 4 in such a shape is employed, the body portion 2 may be resiliently deformed substantially in the direction of contraction by the contractive force of the panel portion 1 generated at the time of environmental deterioration test. In the embodiment of the invention, the body portion 2 is able to contract uniformly by forming the recess 4a and the second recess 4b in the same shape, so that the smoothness of the panel portion 1 before and after the environmental deterioration test may be maintained. The recess 4a and the second recess 4b may be formed substantially into a U-shape in cross-section, and the tear line 3t may not be formed when unnecessary.

In Fig. 3(D), a plurality of the recesses 4a, 4a, 4a on the front surface of the body portion 2 on the cabin side. In Fig. 3(D), although there are three recesses 4a formed, the number of the recesses 4a is not limited to three. The summation of the widths of the respective recesses 4a is set to be equal to or larger than the amount of contraction of the panel portion 1 generated at the time of the environmental deterioration test. Even when the recesses 4a in such a shape are employed, the contraction generated at the time of the environmental deterioration test is absorbed by the recesses 4a. The recesses 4a may be formed substantially into a V-shape in cross-section, and the tear line 3t may not be formed when unnecessary.

In Fig. 3(E), edges of the recess 4a shown in Fig. 3(A) are formed into a smooth curve. By employing such a configuration, even when the body portion 2 and the covering member 3 are pressed against each other, since the edges of the recess 4a are formed into a smooth curve, no trace remains on the covering member 3. Edges of the recesses 4a shown in Fig.1, Fig.2 and Fig. 3 (A-D) may be formed into a smooth curve, as a matter of course. The tear line 3t may not be formed when unnecessary.

The interior component having the panel portion 1 described above is an interior component used for a vehicle, and the term "vehicle" includes various vehicles such as motorcycles, four-wheeled vehicles, electric cars, fuel-cell vehicles, or hybrid cars, engine-mounted compact cars, and is not limited to those which is able to travel on public roads, but also those which travel in specific field or courses such as amusement parks, cart courses, or golf courses. The term "interior component" is not limited to components provided in the cabin of standard passenger cars, but also includes components protected by a wind-shielding member such as a cowl or a fairing, or the like as open cars or motorcycles.

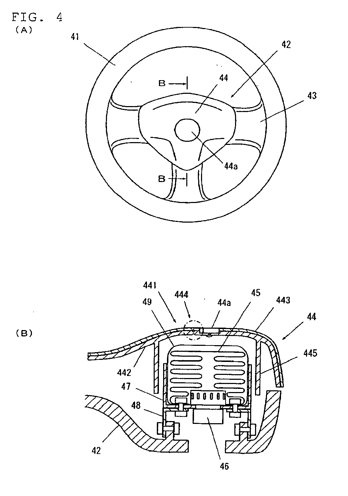

Subsequently, the airbag apparatus according to the present invention will be described. Fig. 4 is a drawing showing an airbag apparatus for a drivers seat mounted in a steering, in which (A) is a front view of the steering and (B) is a schematic cross-sectional view taken along the line B-B in Fig. 4(A).

The steering shown in Fig. 4(A) includes a steering wheel 41 as a handle portion that a driver grips, a boss 42 to be connected to a steering shaft, and spokes 43 for connecting the steering wheel 41 and the boss 42. The airbag apparatus is arranged inside the boss 42, and is covered with a module cover 44 as the interior component. The module cover 44 includes an emblem 44a as a decoration arranged substantially at the center thereof.

As shown in Fig. 4(B), the airbag apparatus in the present invention is an airbag apparatus including an airbag 45 being folded in a normal state and being inflated and deployed in case of emergency, an inflator 46 for supplying gas to the airbag 45, a retainer 47 for storing the airbag 45, and a module cover 44 having a panel portion 441 which constitutes a portion of deployment of the airbag 45, and having a front surface to be exposed to the cabin, and the panel portion 441 is formed with a thinned portion 444 formed with, for example, the recess 4a shown in Fig. 1(A). The configurations of the recess 4a and the thinned portion 444 may be selected and employed from those described above as needed. Therefore, the airbag apparatus according to the present invention has the same effects as those achieved by the interior component.

The module cover 44 is a cover member being formed of resin and having a shape which covers the front surface of the boss 42, and includes a body portion 442 which constitutes the shape of the module cover 44, and a covering member 443 being bonded to the front surface of the body portion 442 on the cabin side. The body portion 442 is formed with a space for storing the airbag apparatus by leg portions 445 substantially at the center of the body portion 442. A portion of the panel portion 441 interposed between the leg portions 445 constitutes the portion for deploying the airbag 45. The panel portion 441 is formed with the thinned portion 444 which is pressed and hence is torn by the inflation of the airbag 45. The module cover 44 may be fixed directly to the boss 42 of by a fixture such as a bolt, or when the module cover 44 has a function of a horn switch, may be fixed indirectly to the boss 42 so as to allow the relative movement with respect to the boss 42, although not shown in the drawing.

The airbag 45 is folded in a normal state and is stored in the retainer 47, and is constrained by a shape-retaining member 49 like a protector cloth or a strap. Although a case in which the airbag 45 is folded inward is shown in the drawing here, other folding methods such as accordion folding may be selected. Although not shown, a tether for forming the shape of the airbag 45 or an inner panel for sectionalizing into a plurality of communicating chambers may be disposed in the interior of the airbag 45. The airbag 45 may be formed with a vent hole for discharging gas in the interior of the airbag 45 when an occupant comes into contact with the airbag 45.

The inflator 46 has a substantially column shaped contour, and is formed with gas injection ports on the side peripheral surface of a distal end portion enclosed by the airbag 45. The inflator 46 is fitted and fixed to an opening formed on the retainer 47. The inflator 46 is connected to an ECU (electronic control unit), not shown, and is controlled on the basis of measured values of an acceleration sensor or the like. When the ECU senses or predicts the collision or the sudden deceleration of the vehicle, the inflator 46 is ignited by an ignition current from the ECU, burns medicament stored in the interior of the inflator 46 to generate gas, and supplies gas to the airbag 45.

The retainer 47 is a member for holding the airbag 45 and the inflator 46 integrally, and is a fixture formed into a box-shape or in an angular C-shape in cross-section. Although not shown in the drawing, a plurality of hooks are disposed on the outer peripheral surface opposing the leg portions 445 of the retainer 47, and are inserted into or engaged with the opening formed on the leg portions 445. The retainer 47 is provided with a link 48 for fixing to the boss 42 on the back surface thereof and is fixed thereby by a fixture such as a bolt.

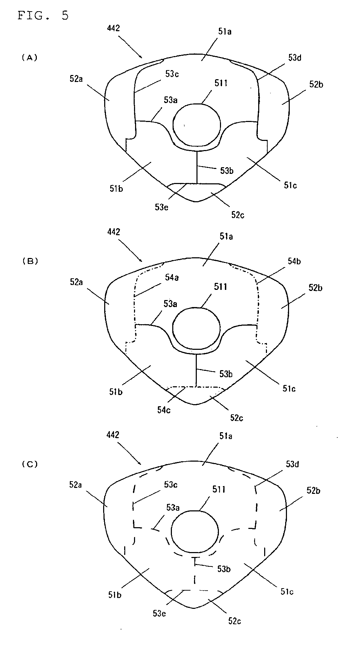

A recess formed on the front surface of the body portion 442 of the module cover 44 will now be described. Fig. 5 is a front view showing the body portion in a state in which a covering member of the module cover is removed, in which (A) shows a case in which the recess is formed into a series of linear grooves, (B) shows a case in which the recess is partly formed, and (C) is a case in which the recess is formed into a groove in a dot-line form.

As shown in Fig. 5(A) to (C), the body portion 442 is divided into flappers 51a, 51b, 51c which are arranged substantially at the center of the body portion 442 and form an opening by being split when the airbag 45 is deployed and fixed portion 52a, 52b, and 52c fixed to the boss 42 by tear lines formed on the back surface thereof. The flapper 51a is formed with a depression 511 for fixing the recess 4a.

The body portion 442 shown in Fig. 5(A) is formed with recesses 53a to 53e along tear lines formed on the back surface thereof. The recess 53a is a curved groove formed between the flapper 51a and the flappers 51b, 51c. The recess 53b is a linear groove formed between the flapper 51b and the flapper 51c. The recess 53c is a curved groove formed between the flappers 51a, 51b and the fixed portion 52a. The recess 53d is a curved groove formed between the flappers 51a, 51c and the fixed portion 52b. The recess 53e is a curved groove formed between the flappers 51b, 51c and the fixed portion 52c. Therefore, as shown by a solid line in the drawing, a series of linear grooves are formed by the recesses 53a to 53e. In the same manner, tear lines as the series of linear grooves are formed on the back surface of the body portion 442, and serve as the second recess in the present invention. However when the configuration of the fourth embodiment shown in Fig. 3(B) is employed, the second recess (tear lines) is not necessary to be formed on the back side of the body portion 442.

The body portion 442 shown in Fig. 5(B) is formed with the recesses 53a, 53b only along part of the tear lines formed on the back surface. Therefore, as shown by a solid line in the drawing, a series of linear grooves are formed by the recesses 53a, 53b. Tear lines as a series of linear grooves are formed in the same manner on the back surface of the body portion 442, and function as the second recess of the present invention. As shown by a chain line in the drawing, on the back surface of the body portion 442, a tear line 54a formed between the flappers 51a, 51b and the fixed portion 52a, a tear line 54b formed between the flappers 51a, 51c and the fixed portion 52b, and a tear line 54c formed between the flappers 51b, 51c and the fixed portion 52c are provided. Since the recess in the present invention is not formed on the side of the front side of the tear lines 54a, 54b, 54c, the tear lines 54a, 54b, and 54c are formed to have a depth larger than that of the tear lines (second recess) formed on the sides of the back surfaces of the recesses 53a, 53b so as to be able to be torn when the airbag is deployed. The reason why the recesses 53a, 53b are partly formed is that it is an important portion in terms of the appearance of the interior component. Therefore, the portions on which the recesses in the present invention are formed are not limited to portions shown in the drawing, and the portion to form the recess may be changed arbitrarily as needed.

The body portion 442 shown in Fig. 5(C) is formed with the recesses 53a to 53e shown in Fig. 5(A) by grooves of a dot-line form. In this configuration as well, the rigidity of the thinned portion 444 may be reduced to an extent in which the contraction generated at the time of the environmental deterioration test is absorbed. It is also possible to form the recesses 53a, 53b shown in Fig. 5(B) by the grooves in the dot-line form in the same manner.

Although the case of the airbag apparatus mounted in the steering has been described here, the airbag apparatus in the present invention is not limited to the airbag apparatus as described above, and may be applied to various types of airbag apparatuses such as an airbag apparatus for a passengers seat mounted in the instrument panel, a side airbag apparatus mounted in the side surface of the vehicle or in the seat, or a knee airbag apparatus mounted to a portion below the dash board.

The present invention is not limited to the embodiments described above, and various modifications are possible without departing the scope of the present invention, such that the configurations or the arrangement of the airbag 45, the inflator 46, and the retainer 47 which constitute the airbag apparatus are not limited to those shown in Fig. 4(B), as a matter of course.

## Claims

1. An interior component for a vehicle, comprising
a panel portion (1; 441) having an exposed front surface; and
a covering member (3) bonded to a side of a front surface of a body portion (2; 442) which constitutes the panel portion (1; 441),
wherein the body portion (2; 442) is partly formed with a thinned portion (4; 444) having a thickness smaller than that of other portions of the body portion, and the thinned portion (4; 444) includes a first recess (4a) which defines a void between the thinned portion (4; 444) and the covering member (3; 443) and a second recess (4b) formed on a back side of the panel portion (1; 441),
**characterized in that**
the thinned portion (4; 444) includes the first recess (4a) and the second recess (4b) formed in the body portion (2; 442) such that center axes of the first recess (4a) and the second recess (4b) are shifted with respect to one another.

2. The interior component for a vehicle according to claim 1, **characterized in that** the first recess (4a) is formed to have a depth equal to or larger than a depth (D) which is aligned to be flush with the front surface of the body portion (2; 442).

3. The interior component for a vehicle according to claim 1 or claim 2, **characterized in that** the first recess (4a) is a groove formed linearly or in a dot-line form.

4. The interior component for a vehicle according to any one of claims 1-3, **characterized in that** the thinned portion (4; 444) is formed so as to be deformed resiliently substantially in a direction of contraction due to a contractive force of the panel portion (1; 441).

5. The interior component for a vehicle according to any one of claims 1-4, **characterized in that** the panel portion (1; 441) is a portion for deploying an airbag (45), and the thinned portion (4; 444) is formed to have a thickness which is able to torn thereof when the airbag (45) is deployed.

6. An airbag apparatus, comprising:
an airbag (45) being folded in a normal state and being inflated and deployed in case of emergency;
an inflator (46) for supplying gas to the airbag (45);
a retainer (47) for storing the airbag (45), and
an interior component (44) having a panel portion (1; 441) which constitutes a portion for deploying the airbag (45) and having an exposed front surface,
**characterized in that**
the interior component is an interior component (44) according to any one of claim 1 to claim 5.

## Patentansprüche

1. Innenkomponente für ein Fahrzeug, umfassend
einen Plattenabschnitt (1; 441) mit einer freiliegenden Vorderfläche; und
Abdeckteil (3), welches mit einer Seite einer Vorderfläche eines den Plattenabschnitt (1; 441) bildenden Körperabschnitts (2; 442) verbunden ist,
wobei der Körperabschnitt (2; 442) teilweise mit einem verdünnten Abschnitt (4; 444) ausgebildet ist, welcher eine geringere Dicke als diejenige anderer Abschnitte des Körperabschnitts aufweist, und wobei der verdünnte Abschnitt (4; 444) eine erste Aussparung (4a), welche zwischen dem verdünnten Abschnitt (4; 444) und dem Abdeckteil (3; 443) eine Lücke definiert, und eine auf einer Rückseite des Plattenabschnitts (1; 441) ausgebildete zweite Aussparung (4b) aufweist,
**dadurch gekennzeichnet,**
**dass** der verdünnte Abschnitt (4; 444) die in dem Körperabschnitt (2; 442) ausgebildete erste Aussparung (4a) und zweite Aussparung (4b) derart aufweist, dass Mittelachsen der ersten Aussparung (4a) und der zweiten Aussparung (4b) zueinander versetzt sind.

2. Innenkomponente für ein Fahrzeug nach Anspruch 1, **dadurch gekennzeichnet, dass** die erste Aussparung (4a) mit einer Tiefe ausgebildet ist, welche gleich groß oder größer als eine Tiefe (D) ist, welche bündig mit der Vorderfläche des Körperabschnitts (2; 442) ist.

3. Innenkomponente für ein Fahrzeug nach Anspruch 1 oder Anspruch 2, **dadurch gekennzeichnet, dass** die erste Aussparung (4a) eine linear oder in Punktlinienform ausgebildete Nut ist.

4. Innenkomponente für ein Fahrzeug nach einem der Ansprüche 1-3, **dadurch gekennzeichnet, dass** der verdünnte Abschnitt (4; 444) derart ausgebildet ist, dass er durch eine kontrahierende Kraft des Plattenabschnitts (1; 441) im Wesentlichen in eine Kontraktionsrichtung elastisch deformiert wird.

5. Innenkomponente für ein Fahrzeug nach einem der Ansprüche 1-4, **dadurch gekennzeichnet, dass** der Plattenabschnitt (1; 441) ein Abschnitt zum Entfalten eines Airbags (45) ist und der verdünnte Abschnitt (4; 444) mit einer Dicke ausgebildet ist, welche beim Entfalten des Airbags (45) aufgerissen werden kann.

6. Airbagvorrichtung, umfassend:
einen Airbag (45), der in einem normalen Zustand gefaltet ist und in einem Notfall aufgeblasen und entfaltet wird;
eine Aufblaseinrichtung (46), um dem Airbag (45) Gas zuzuführen;
eine Halterung (47) zum Aufnehmen des Airbags (45), und
eine Innenkomponente (44) mit einem Plattenabschnitt (1; 441), welcher einen Abschnitt zum Entfalten des Airbags (45) darstellt und eine freiliegende Vorderfläche aufweist,
**dadurch gekennzeichnet,**
**dass** die Innenkomponente eine Innenkomponente (44) nach einem der Ansprüche 1-5 ist.

## Revendications

1. Garniture intérieure pour un véhicule, comprenant:
- une partie de panneau (1; 441) ayant une surface frontale exposée; et
- un élément de recouvrement (3) relié à une face d'une surface frontale d'une partie d'armature (2; 442) qui constitue la partie de panneau (1; 441),
dans laquelle la partie d'armature (2; 442) est partiellement formée d'une portion amincie (4; 444) présentant une épaisseur inférieure à celle des autres parties de la partie d'armature, ladite portion amincie (4; 444) comprenant un premier évidement (4a) qui définit un vide entre la portion amincie (4; 444) et l'élément de recouvrement (3; 443) et comprenant un second évidement (4b) formé sur la face arrière de la partie de panneau (1; 441),
**caractérisée en ce que**:
la portion amincie (4; 444) formée dans la partie d'armature (2; 442) comprend le premier évidement (4a) et le second évidement (4b) et de sorte que les axes centraux du premier évidement (4a) et du second évidement (4b) soient décalés l'un par rapport à l'autre.

2. Garniture intérieure pour un véhicule selon la revendication 1, **caractérisée en ce que** le premier évidement (4a) est formé de façon à présenter une profondeur égale ou supérieure à une profondeur (D) qui est alignée pour être de niveau avec la surface frontale de la partie d'armature (2; 442).

3. Garniture intérieure pour un véhicule selon la revendication 1 ou la revendication 2, **caractérisée en ce que** le premier évidement (4a) est une rainure linéaire ou en forme de ligne pointillée.

4. Garniture intérieure pour un véhicule selon l'une quelconque des revendications 1 à 3, **caractérisée en ce que** la portion amincie (4; 444) présente une forme susceptible d'être déformée de manière élastique sensiblement selon une direction de contraction due à une force de contraction exercée par la partie de panneau (1; 441).

5. Garniture intérieure pour un véhicule selon l'une quelconque des revendications 1 à 4, **caractérisée en ce que** la partie de panneau (1; 441) est une partie permettant le déploiement d'un coussin de sécurité gonflable (45), et la portion amincie (4; 444) est réalisée pour présenter une épaisseur qui est susceptible de se déchirer lorsque le coussin de sécurité gonflable (45) est déployé.

6. Appareil de coussin de sécurité gonflable comprenant:
- un coussin de sécurité gonflable (45) qui à l'état normal est plié et qui en cas d'urgence est gonflé et déployé;
- un gonfleur (46) pour alimenter en gaz le coussin de sécurité gonflable (45); un dispositif de retenue (47) pour ranger le coussin de sécurité gonflable (45), et
- une garniture intérieure (44) ayant une partie de panneau (1; 441) qui constitue une partie permettant le déploiement du coussin de sécurité gonflable (45) et ayant une surface frontale exposée,
**caractérisé en ce que**:
la garniture intérieure est une garniture intérieure (44) selon l'une quelconque des revendications 1 à 5.
